# EUROPÄISCHE PATENTSCHRIFT

(11) **EP 2 910 106 B1**
(45) Veröffentlichungstag und Bekanntmachung des Hinweises auf die Patenterteilung: **21.09.2016**
(21) Anmeldenummer: 15154946.6
(22) Anmeldetag: 13.02.2015
(51) Int. Cl.: A01D 90/04, A01F 15/10

(54) **Schneidwerk für eine Erntemaschine**
Cutting assembly for an agricultural harvester
Barre de coupe pour une moissonneuse

(30) Priorität: 25.02.2014 DE 102014102394
(43) Veröffentlichungstag der Anmeldung: 26.08.2015
(73) Patentinhaber: CLAAS Saulgau GmbH, 88348 Bad Saulgau (DE)
(72) Erfinder: Birkhofer, Stefan, 78333 Stockach (DE)

(56) Entgegenhaltungen:
- EP-A2- 1 062 860
- EP-B1- 2 540 151
- DE-A1- 19 646 316
- DE-U1- 29 715 951
- US-A1- 2013 167 498

## Beschreibung

Die Erfindung betrifft ein Schneidwerk für eine Erntemaschine, wie insbesondere einen Ladewagen oder eine Ballenpresse.

EP 1 062 860 A2 offenbart einen Zuführkanal für ein Erntefahrzeug, insbesondere für eine landwirtschaftliche Aufsammelballenpresse, welcher von unten in einen Presskanal mündet und welchem eine Schneidvorrichtung mit einem nach unten wegschwenkbaren Schneidwerkboden vorgeschaltet ist, wobei der Zuführkanal einen absenkbaren Zuführkanalboden aufweist.

Aus EP 2 540 151 B1 ist z.B. ein Schneidwerk für eine Erntemaschine bekannt, welches ein Gehäuse und eine Fördertrommel für Erntegut umfasst, die im Gehäuse angeordnet um eine in einer Längsrichtung dieser verlaufende Drehachse drehbar gelagert ist, ein Leitelement bzw. Bodenblech, das sich so umfänglich entlang der Fördertrommel erstreckt, dass zwischen der Fördertrommel und dem Leitelement ein Förderkanal für das Erntegut gebildet ist, eine Mehrzahl von sich in einer Schneidposition dieser jeweils durch das Leitelement hindurch in den Förderkanal erstreckenden Schneidmessern und eine Lagerungseinrichtung aufweist, an der die Schneidmesser schwenkbar gelagert sind. Bei diesem Schneidwerk ist das Leitelement fest eingebaut, so dass im Falle einer Verstopfung des Förderkanals dieser nicht geöffnet werden kann. Tritt ein sogenannter Stopfer durch z.B. einen Fremdkörper oder ein Grasknäuel im Förderkanal auf, so werden nur die Schneidmesser aus dem Förderkanal herausgeschwenkt und wird der Fremdkörper oder das Grasknäuel von der Fördertrommel durch den Förderkanal hindurchgedrückt. Problematisch kann dieser beschränkte Zugang zum Schneidwerk jedoch sein, wenn sich größere Mengen Gras im Förderkanal befinden oder wenn große Fremdkörper (wie z.B. ein Zaunpfahl usw.) in den Förderkanal eingezogen wurden.

Der Erfindung liegt daher die Aufgabe zugrunde, ein Schneidwerk für eine Erntemaschine, wie insbesondere einen Ladewagen oder eine Ballenpresse, bereitzustellen, welches einen verbesserten Zugang zu seinen Komponenten erlaubt.

Dies wird mit einem Schneidwerk gemäß Anspruch 1 erreicht. Weiterbildungen der Erfindung sind in den abhängigen Ansprüchen definiert.

Gemäß der Erfindung weist ein Schneidwerk für eine Erntemaschine, wie insbesondere einen Ladewagen oder eine Ballenpresse, auf: einen ersten Schneidwerksteil, welcher ein Gehäuse und eine Fördertrommel für Erntegut umfasst, die im Gehäuse angeordnet um eine in einer Längsrichtung dieser verlaufende Drehachse drehbar gelagert ist; einen zweiten Schneidwerksteil, welcher ein Leitelement umfasst, das sich so umfänglich entlang der Fördertrommel erstreckt, dass zwischen der Fördertrommel und dem Leitelement ein Förderkanal für das Erntegut gebildet ist, und welcher um eine parallel zur Drehachse der Fördertrommel verlaufende erste Schneidwerksschwenkachse schwenkbar am ersten Schneidwerksteil gelagert ist, so dass als eine erste Schwenkung mit dem zweiten Schneidwerksteil das Leitelement radial von der Fördertrommel wegschwenkbar ist; einen dritten Schneidwerksteil, welcher eine Mehrzahl von sich in einer Schneidposition dieser jeweils durch das Leitelement hindurch in den Förderkanal erstreckenden Schneidmessern und eine Lagerungseinrichtung umfasst, an der die Schneidmesser gelagert sind, und welcher um eine parallel zur ersten Schneidwerksschwenkachse verlaufende zweite Schneidwerksschwenkachse schwenkbar am zweiten Schneidwerksteil gelagert ist, so dass als eine zweite Schwenkung mit dem dritten Schneidwerksteil die Lagerungseinrichtung vom Leitelement wegschwenkbar ist; und eine Schalteinrichtung, die eingerichtet ist, selektiv einen ersten Schaltzustand, in dem die erste Schwenkung gesperrt ist und die zweite Schwenkung ermöglicht ist, einen zweiten Schaltzustand, in dem die erste und die zweite Schwenkung ermöglicht sind, und einen dritten Schaltzustand, in dem die erste Schwenkung ermöglicht ist und die zweite Schwenkung gesperrt ist, herzustellen.

Dadurch, dass gemäß der Erfindung der zweite Schneidwerksteil um die erste Schneidwerksschwenkachse schwenkbar am ersten Schneidwerksteil gelagert ist, so dass als erste Schwenkung mit dem zweiten Schneidwerksteil das Leitelement radial von der Fördertrommel wegschwenkbar ist, und der dritte Schneidwerksteil um die zweite Schneidwerksschwenkachse schwenkbar am zweiten Schneidwerksteil gelagert ist, so dass als zweite Schwenkung mit dem dritten Schneidwerksteil die Lagerungseinrichtung und damit auch die Schneidmesser vom Leitelement wegschwenkbar sind, kann das Schneidwerk nach Bedarf sowohl zwischen Fördertrommel und Leitelement als auch zwischen Leitelement und Schneidmessern geöffnet werden und bietet somit einen verbesserten Zugang zu seinen Komponenten. Mittels der Schalteinrichtung, welche die drei Schaltzustände realisieren kann, können selektiv unterschiedliche Zugangsvarianten gewählt bzw. eingestellt werden.

Gemäß einer Ausführungsform der Erfindung weist das Schneidwerk ferner eine Antriebseinrichtung auf, die mit dem dritten Schneidwerksteil gekoppelt ist, so dass durch eine Antriebsbewegung der Antriebseinrichtung sowohl die erste Schwenkung als auch die zweite Schwenkung antreibbar ist.

Durch die Antriebseinrichtung lassen sich die unterschiedlichen Zugangsvarianten komfortabel realisieren. Dadurch, dass mit der Antriebseinrichtung die erste Schwenkung und auch die zweite Schwenkung antreibbar sind, werden bei Erhöhung des Betriebskomforts der Herstellungsaufwand und die Komplexität des Schneidwerks nicht übermäßig erhöht.

Insbesondere lässt sich durch den ersten Schaltzustand der Schalteinrichtung in Verbindung mit dem Antrieb der Antriebseinrichtung eine Wartungsstellung des das Schneidwerks realisieren, lässt sich durch den zweiten Schaltzustand der Schalteinrichtung in Verbindung mit dem Antrieb der Antriebseinrichtung eine erste Freigabestellung des Schneidwerks realisieren und lässt sich durch den dritten Schaltzustand der Schalteinrichtung in Verbindung mit dem Antrieb der Antriebseinrichtung eine zweite Freigabestellung des Schneidwerks realisieren.

Bevorzugt kann die Antriebseinrichtung z.B. zwei bewegungssynchronisierte hydraulische Kolben-Zylinder-Einheiten aufweisen, welche an entgegengesetzten Längsenden der Fördertrommel angeordnet sind. Bevorzugt sind die Kolben-Zylinder-Einheiten dabei jeweils mit einem Ende (Kolbenstange oder Zylinder) mit einem stationären Element der Erntemaschine verbindbar bzw. mit dem ersten Schneidwerksteil als stationäres Element verbunden bzw. daran angelenkt und mit dem anderen Ende (Zylinder bzw. Kolbenstange) mit dem dritten Schneidwerksteil verbunden bzw. daran angelenkt.

Hydraulische Kolben-Zylinder-Einheiten lassen sich in einfacher Weise in die Hydraulik einer Erntemaschine integrieren und reduzieren so den Ansteuerungsaufwand für die Antriebseinrichtung. Natürlich könnte die Antriebseinrichtung anstelle der Kolben-Zylinder-Einheiten auch andere Motoren wie Linearmotoren (mit z.B. Spindelantrieb) oder Rotationsmotoren (z.B. Servomotoren) zum Antreiben der ersten und zweiten Schwenkungen aufweisen.

Gemäß einer weiteren Ausführungsform der Erfindung ist der dritte Schneidwerksteil so eingerichtet, dass im ersten Schaltzustand die zweite Schwenkung, wobei der dritte Schneidwerksteil mit der Lagerungseinrichtung der Schneidmesser vom Leitelement weggeschwenkt wird, mit einem Öffnungsschwenkwinkel von mindestens 70 Grad, bevorzugt mindestens 80 Grad, ermöglicht ist.

Durch dieses weite Öffnen des dritten Schneidwerksteils gegenüber dem zweiten Schneidwerksteil wird eine für eine Wartung der Schneidmesser und einer ebenfalls im dritten Schneidwerksteil angeordneten Schneidwerksmechanik geeignete Zugangsvariante komfortabel realisiert. Mit anderen Worten werden im ersten Schaltzustand durch die zweite Schwenkung die an der Lagerungseinrichtung gelagerten Schneidmesser vollständig aus dem Leitelement des zweiten Schneidwerksteils herausgeschwenkt, so dass sowohl die Schneidmesser als auch die Schneidwerksmechanik im Bereich des Öffnungsschwenkwinkels zugänglich sind.

Gemäß noch einer Ausführungsform der Erfindung ist die Schalteinrichtung eingerichtet, im zweiten Schaltzustand die erste Schwenkung so zu ermöglichen, dass das radiale von der Fördertrommel Wegschwenken des Leitelements mit dem zweiten Schneidwerksteil auf einen vorbestimmten Erweiterungsschwenkwinkel zum Erweitern des Förderkanals begrenzt ist. Bevorzugt beträgt der Erweiterungsschwenkwinkel weniger als 10 Grad, bevorzugt etwa 5 Grad.

Dadurch, dass im zweiten Schaltzustand die erste Schwenkung mit dem Erweiterungsschwenkwinkel zum Erweitern des Förderkanals ermöglicht ist, kann im Falle eines Stopfers im Förderkanal durch dessen Erweiterung der Stopfer leichter durch den Förderkanal hindurchgedrückt werden. Da der Förderkanal jedoch nicht vollständig geöffnet wird, sondern nur um den Erweiterungsschwenkwinkel erweitert wird, wird zusätzlich vorteilhaft vermieden, dass Erntegut wie Gras zurück auf das Feld fällt.

Gemäß noch einer weiteren Ausführungsform der Erfindung ist die Schalteinrichtung eingerichtet, im zweiten Schaltzustand die zweite Schwenkung so zu ermöglichen, dass in Bezug auf eine vollendete erste Schwenkung die Schneidmesser durch das vom Leitelement Wegschwenken der Lagerungseinrichtung aus der Schneidposition und damit aus dem Förderkanal heraus bewegbar bzw. schwenkbar sind.

In Kombination mit der Erweiterung des Förderkanals um den Erweiterungsschwenkwinkel wird durch das aus dem Förderkanal Herausbewegen der Schneidmesser bei einem Stopfer im Förderkanal weiterer Widerstand gegen ein Durchdrücken dessen beseitigt, so dass das Durchdrücken bzw. Beseitigen des Stopfers zusätzlich erleichtert wird.

Gemäß einer weiteren Ausführungsform der Erfindung ist die Schalteinrichtung eingerichtet, im ersten Schaltzustand den zweiten Schneidwerksteil mit vorbestimmtem Abstand von der ersten Schneidwerksschwenkachse ohne Schwenkbewegungstoleranz mechanisch direkt mit dem ersten Schneidwerksteil zu koppeln.

Diese direkte mechanische Kopplung des zweiten Schneidwerksteils an den ersten Schneidwerksteil realisiert in einfacher und robuster Weise die Sperrung der ersten Schwenkung im ersten Schaltzustand. Ferner lässt sich diese Ausgestaltung der Sperrung der ersten Schwenkung bzw. der Kopplung von erstem und zweitem Schneidwerksteil auch vorteilhaft im Normalbetrieb des Schneidwerks nutzen, womit zusätzliche Kopplungseinrichtungen entfallen können.

Gemäß noch einer Ausführungsform der Erfindung ist die Schalteinrichtung eingerichtet, im zweiten Schaltzustand den zweiten Schneidwerksteil mit vorbestimmtem Abstand von der ersten Schneidwerksschwenkachse mit Schwenkbewegungstoleranz mechanisch direkt mit dem ersten Schneidwerksteil zu koppeln.

Diese direkte mechanische Kopplung mit Schwenkbewegungstoleranz realisiert in einfacher und robuster Weise die Beschränkung der ersten Schwenkung auf den vorbestimmten Erweiterungsschwenkwinkel.

Gemäß noch einer weiteren Ausführungsform der Erfindung ist die Schalteinrichtung eingerichtet, im dritten Schaltzustand den zweiten Schneidwerksteil mit vorbestimmtem Abstand von der zweiten Schneidwerksschwenkachse ohne Schwenkbewegungstoleranz mechanisch direkt mit dem dritten Schneidwerksteil zu koppeln.

Diese direkte mechanische Kopplung des zweiten Schneidwerksteils an den dritten Schneidwerksteil realisiert in einfacher und robuster Weise die Sperrung der zweiten Schwenkung im dritten Schaltzustand. Ferner lässt sich diese Ausgestaltung der Sperrung der zweiten Schwenkung bzw. der Kopplung von zweitem und drittem Schneidwerksteil auch vorteilhaft im Normalbetrieb des Schneidwerks nutzen, womit zusätzliche Kopplungseinrichtungen entfallen können.

Gemäß einer weiteren Ausführungsform der Erfindung weist die Schalteinrichtung eine Arretierungsvorrichtung, welche am zweiten Schneidwerksteil angebracht ist und welche einen ersten Fanghaken und einen ersten Bolzen umfasst, die zum Realisieren der ersten bis dritten Schaltzustände beweglich gelagert sind; einen zweiten Bolzen, welcher am ersten Schneidwerksteil vorgesehen ist; und einen zweiten Fanghaken auf, welcher am dritten Schneidwerksteil vorgesehen ist; wobei für den ersten Schaltzustand der erste Fanghaken auf eine Position bewegbar ist, in welcher der erste Fanghaken mit dem zweiten Bolzen in Eingriff steht; wobei für den zweiten Schaltzustand der erste Fanghaken auf eine Position bewegbar ist, in welcher der erste Fanghaken mit Abstand vom zweiten Bolzen auf einer durch den zweiten Bolzen verlaufenden Schwenkbahn bezüglich der ersten Schneidwerksschwenkachse angeordnet ist, so dass der erste Fanghaken mit Vollendung der ersten Schwenkung mit dem zweiten Bolzen in Eingriff gelangt; und wobei für den dritten Schaltzustand der erste Bolzen auf eine Position bewegbar ist, in welcher der erste Bolzen mit dem zweiten Fanghaken in Eingriff steht.

Diese Ausgestaltung der Schalteinrichtung mit Fanghaken und Bolzen ist einfach und robust und damit besonders für die harten Einsatzbedingungen im Ernteeinsatz geeignet. Außerdem lässt sich eine solche Schalteinrichtung mit geringem Aufwand realisieren.

Bevorzugt kann gemäß einer Ausführungsform der Erfindung die Schalteinrichtung zusätzlich mindestens einen vierten Schaltzustand herstellen, in dem die erste Schwenkung und die zweite Schwenkung gesperrt sind. Genauer ist gemäß einer Ausführungsform der Erfindung für den vierten Schaltzustand der erste Fanghaken auf die Position bewegbar, in welcher der erste Fanghaken mit dem zweiten Bolzen in Eingriff steht, und ist der erste Bolzen auf die Position bewegbar, in welcher der erste Bolzen mit dem zweiten Fanghaken in Eingriff steht. Der vierte Schaltzustand kann vorteilhaft für den Normalbetrieb des Schneidwerks genutzt werden.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand einer bevorzugten Ausführungsform und unter Bezugnahme auf die beigefügten Figuren detaillierter beschrieben.
- Fig. 1: zeigt eine Seitenansicht einer mit einem Schneidwerk gemäß einer Ausführungsform der Erfindung ausgerüsteten Erntemaschine, wobei sich das Schneidwerk in einer Wartungsstellung befindet.
- Fig. 2: zeigt eine vergrößerte Ansicht eines Teils des Schneidwerks von Fig. 1, wobei sich eine Schalteinrichtung des Schneidwerks in einem Schaltzustand zum Ermöglichen der Wartungsstellung befindet.
- Fig. 3: zeigt eine vergrößerte Ansicht des Schneidwerks gemäß der Ausführungsform der Erfindung, wobei sich das Schneidwerk in einer ersten Freigabestellung befindet.
- Fig. 4: zeigt eine vergrößerte Ansicht eines Teils des Schneidwerks von Fig. 3, wobei sich die Schalteinrichtung des Schneidwerks in einem Schaltzustand zum Ermöglichen der ersten Freigabestellung befindet.
- Fig. 5: zeigt eine vergrößerte Ansicht des Schneidwerks gemäß der Ausführungsform der Erfindung, wobei sich das Schneidwerk in einer zweiten Freigabestellung befindet.
- Fig. 6: zeigt eine vergrößerte Ansicht eines Teils des Schneidwerks von Fig. 5, wobei sich die Schalteinrichtung des Schneidwerks in einem Schaltzustand zum Ermöglichen der zweiten Freigabestellung befindet.

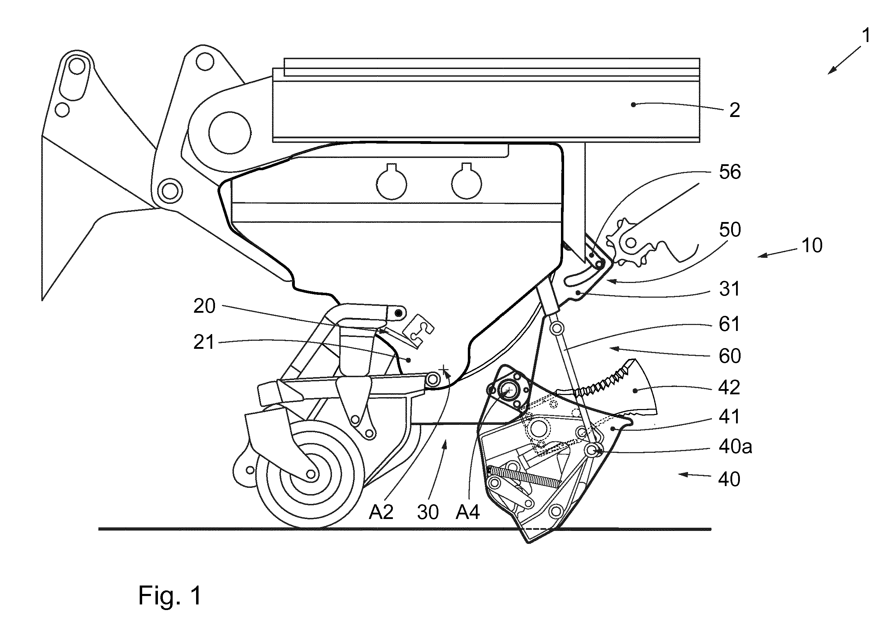

Im Folgenden wird unter Bezugnahme auf die Figuren 1 bis 6 ein gemäß einer Ausführungsform der Erfindung ausgebildetes Schneidwerk 10 einer Erntemaschine 1 (nicht vollständig dargestellt) beschrieben werden.

Die Erntemaschine 1 ist bevorzugt als Ladewagen oder Ballenpresse (hier insbesondere als Ladewagen) ausgebildet, wobei dem Schneidwerk 10 eine Pickupeinrichtung (nicht im Detail dargestellt und nicht separat bezeichnet) mit z.B. einer Stachelwalze zur Aufnahme von nicht dargestelltem Erntegut (wie z.B. Gras oder anderem Halm- und/oder Blattgut) von einem landwirtschaftlichen Feld vorgelagert ist.

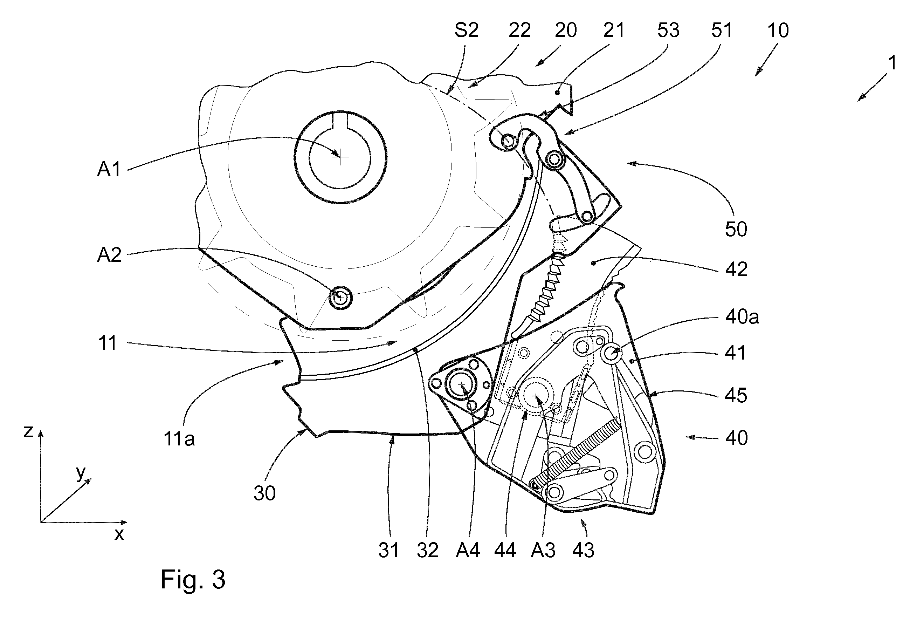

Das von der Pickupeinrichtung bzw. Aufnahmeeinrichtung aufgenommene Erntegut wird dann von dieser rotatorisch zu einem Eingang 11 a eines Förderkanals 11 des Schneidwerks 10 (siehe Fig. 3) gefördert und dort von einer Fördertrommel 22 des Schneidwerks 10 übernommen und entlang des Förderkanals 11 zum Zerschneiden weitergefördert. Nach dem Zerschneiden des Ernteguts wird dieses an einem Ausgang (nicht bezeichnet) aus dem Förderkanal 11 ausgegeben und dort z.B. von einer Presseinrichtung oder einer weiteren Fördereinrichtung (beide Letzteren nicht dargestellt) übernommen.

Im Detail weist das Schneidwerk 10 einen ersten Schneidwerksteil 20, einen zweiten Schneidwerksteil 30, einen dritten Schneidwerksteil 40 und eine Schalteinrichtung 50 auf.

Der erste Schneidwerksteil 20 umfasst ein stationär an einem Rahmen 2 der Erntemaschine 1 angebrachtes erstes Gehäuse 21 und eine Fördertrommel 22 für Erntegut, die im ersten Gehäuse 21 angeordnet um eine in einer Längsrichtung (y-Achsenrichtung z.B. in Fig. 3) dieser verlaufende Drehachse A1 drehbar am ersten Gehäuse 21 gelagert ist.

Der zweite Schneidwerksteil 30 umfasst ein zweites Gehäuse 31 mit einem als Bodenblech dessen ausgebildeten Leitelement 32, das sich so umfänglich entlang der Fördertrommel 22 erstreckt, dass sowohl in einer Normalbetriebsstellung als auch in einer in Fig. 1 gezeigten Wartungsstellung und in einer in Fig. 3 gezeigten ersten Freigabestellung des Schneidwerks 10 zwischen der Fördertrommel 22 und dem Leitelement 32 der Förderkanal 11 für das Erntegut gebildet ist.

Der zweite Schneidwerksteil 30 ist um eine parallel zur Drehachse A1 der Fördertrommel 22 verlaufende erste Schneidwerksschwenkachse A2 schwenkbar am ersten Gehäuse 21 des ersten Schneidwerksteils 20 gelagert, so dass als eine erste Schwenkung mit dem zweiten Schneidwerksteil 30 das zweite Gehäuse 31 mit seinem Leitelement 32 radial von der Fördertrommel 22 wegschwenkbar ist.

Der dritte Schneidwerksteil 40 umfasst ein drittes Gehäuse 41 sowie im dritten Gehäuse 41 angeordnet und gelagert eine Mehrzahl von sich in einer Schneidposition dieser jeweils durch das Leitelement 32 hindurch (durch eine nicht bezeichnete jeweilige schlitzförmige Öffnung im Leitelement hindurch) in den Förderkanal 11 erstreckenden Schneidmessern 42 (in den Figuren ist nur ein Schneidmesser 42 gezeigt) und eine Schneidwerksmechanik 43 zum Lagern, Sichern und Verstellen der Schneidmesser 42. Das Leitelement 32 des zweiten Schneidwerksteils 30 schirmt dabei im Normalbetrieb des Schneidwerks 10 die Schneidwerksmechanik 43 gegen den Förderkanal 11 ab. Die Schneidmesser 42 sind in Längsrichtung (y-Achsenrichtung) der Fördertrommel 22 mit jeweiligem Abstand voneinander nebeneinanderliegend in einer Reihe angeordnet, so dass sie die gesamte Arbeitslänge der Fördertrommel 22 abdecken bzw. nutzen.

Die Schneidwerksmechanik 43 umfasst eine Lagerungseinrichtung 44, an der die Schneidmesser 42 jeweils gelagert sind, so dass sie um eine parallel zur Drehachse A1 der Fördertrommel 22 verlaufende Schneidmesserschwenkachse A3 in den Förderkanal 11 hinein (Schneidposition) und aus dem Förderkanal 11 heraus (eine Außerbetriebsposition bzw. eine Ausweichposition) verschwenkbar sind.

Die Schneidwerksmechanik 43 umfasst außerdem eine Schneidmesser-Überlastsicherung 45, welche die Schneidmesser 42 mit einer vorbestimmten Vorspannkraft in die Schneidposition vorspannt und welche bei Überschreiten der Vorspannkraft (durch z.B. einen Fremdkörper im Förderkanal 11 verursacht) ein gegen die Vorspannkraft in die Ausweichposition ausweichen der Schneidmesser 42 zulässt. Darüber hinaus umfasst die Schneidwerksmechanik 43 eine Stelleinrichtung (nicht bezeichnet), mit welcher die Schneidmesser 42 in Gruppen oder als Gesamtheit in die Außerbetriebsposition verbringbar sind.

Der dritte Schneidwerksteil 40 ist seinerseits quasi in Reihe geschaltet zu den ersten und zweiten Schneidwerksteilen 20, 30 um eine parallel zur ersten Schneidwerksschwenkachse A2 verlaufende zweite Schneidwerksschwenkachse A4 schwenkbar am zweiten Schneidwerksteil 30 gelagert, so dass als eine zweite Schwenkung mit dem dritten Schneidwerksteil 40 das dritte Gehäuse 41 sowie die darin gelagerten Komponenten Schneidmesser 42 und Schneidwerksmechanik 43 mit der Lagerungseinrichtung 44 vom Leitelement 32 des zweiten Schneidwerksteils 30 wegschwenkbar sind.

Dadurch, dass wie beschrieben der zweite Schneidwerksteil 30 um die erste Schneidwerksschwenkachse A2 schwenkbar am ersten Schneidwerksteil 20 gelagert ist, so dass als erste Schwenkung mit dem zweiten Schneidwerksteil 30 das Leitelement 32 radial von der Fördertrommel 22 wegschwenkbar ist, und der dritte Schneidwerksteil 40 um die zweite Schneidwerksschwenkachse A4 schwenkbar am zweiten Schneidwerksteil 30 gelagert ist, so dass als zweite Schwenkung mit dem dritten Schneidwerksteil 40 die Schneidwerksmechanik 43 mit der Lagerungseinrichtung 44 und damit auch die Schneidmesser 42 vom Leitelement 32 wegschwenkbar sind, kann das Schneidwerk 10 nach Bedarf sowohl zwischen Fördertrommel 22 und Leitelement 32 als auch zwischen Leitelement 32 und drittem Gehäuse 41 geöffnet werden und bietet somit einen verbesserten Zugang zu seinen Komponenten.

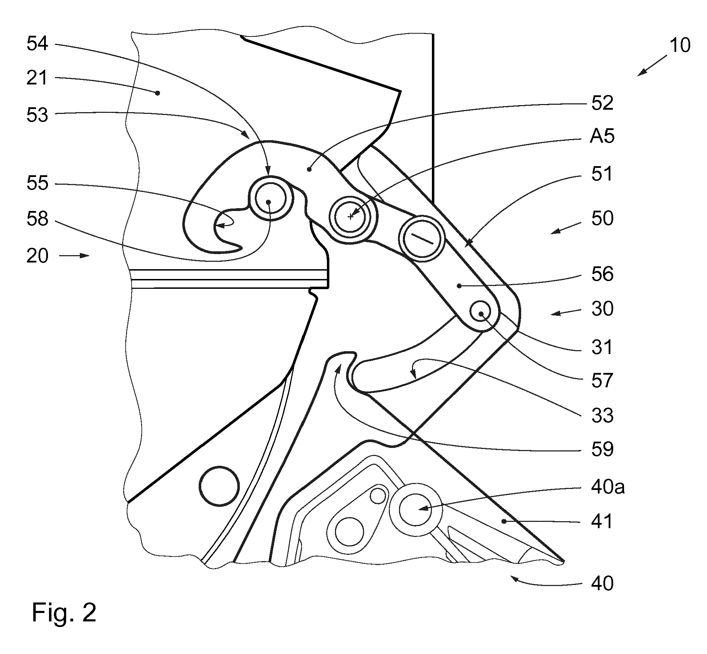

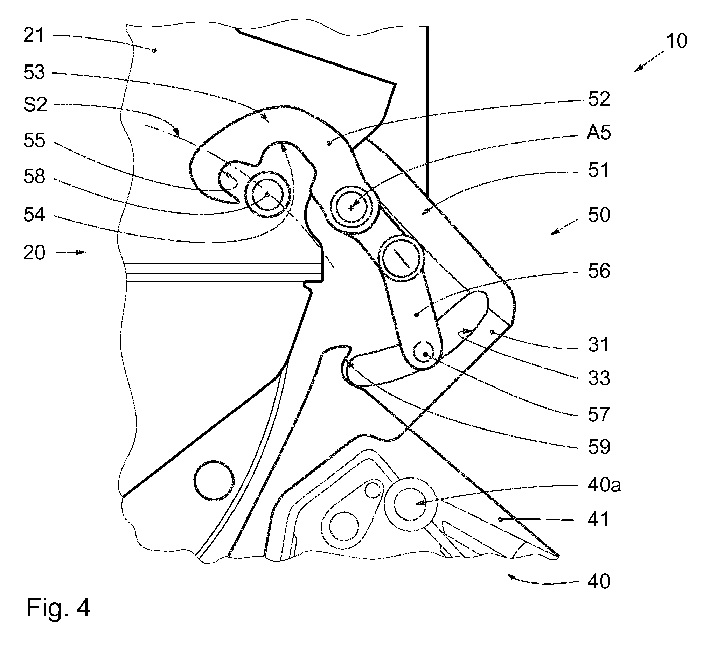

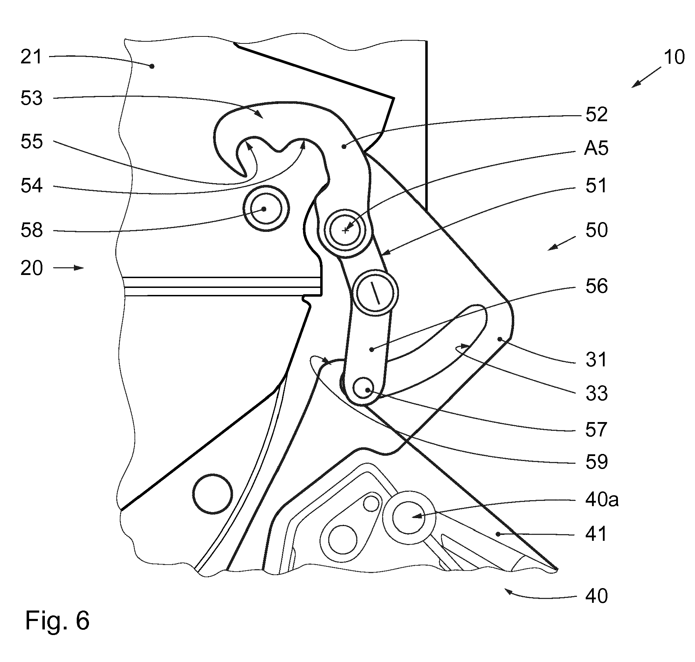

Mittels der Schalteinrichtung 50, welche drei unterschiedliche Schaltzustände realisieren kann, können selektiv unterschiedliche Zugangsvarianten gewählt bzw. eingestellt werden. Genauer ist die Schalteinrichtung 50 eingerichtet, selektiv einen in Fig. 2 gezeigten ersten Schaltzustand, in dem die erste Schwenkung gesperrt ist und die zweite Schwenkung ermöglicht ist, einen in Fig. 4 gezeigten zweiten Schaltzustand, in dem die erste und die zweite Schwenkung ermöglicht sind, und einen in Fig. 6 gezeigten dritten Schaltzustand, in dem die erste Schwenkung ermöglicht ist und die zweite Schwenkung gesperrt ist, herzustellen.

Die Schalteinrichtung 50 weist im Detail eine Arretierungsvorrichtung 51 auf, welche am zweiten Gehäuse 31 des zweiten Schneidwerksteils 30 angebracht ist und welche ein erstes hebeiförmiges Stellelement 52 und ein zweites hebeiförmiges Stellelement 56 umfasst, die an jeweiligen einen Längsenden dieser miteinander um eine Stellelementschwenkachse A5 schwenkbar am zweiten Gehäuse 31 des zweiten Schneidwerksteils 30 gelagert sind. Genauer sind die beiden Stellelemente 52, 56 über die Stellelementschwenkachse A5 miteinander verbunden und um die Stellelementschwenkachse A5 selektiv gemeinsam oder einzeln schwenkbar. Das Steuern und Antreiben dieser Schwenkbewegungen der Stellelemente 52, 56 um die Stellelementschwenkachse A5 kann z.B. durch nicht dargestellte hydraulische Kolben-Zylinder-Einheiten realisiert sein.

Das erste Stellelement 52 weist an seinem der Stellelementschwenkachse A5 abgewandten anderen Längsende einen ersten Fanghaken 53 mit zwei voneinander beabstandeten Rastabschnitten 54, 55 auf. Das zweite Stellelement 56 weist an seinem der Stellelementschwenkachse A5 abgewandten anderen Längsende einen ersten Bolzen (Zapfen) 57 auf, welcher in einem bogenförmigen Langloch 33 im zweiten Gehäuse 31 geführt ist und welcher sich um ein vorbestimmtes Maß in y-Achsenrichtung erstreckt. Durch die beschriebene Verschwenkbarkeit der Stellelemente 52, 56 sind der erste Fanghaken 53 und der erste Bolzen 57 zum Realisieren der ersten bis dritten Schaltzustände beweglich gelagert.

Die Schalteinrichtung 50 weist außerdem einen zweiten Bolzen (Zapfen) 58, welcher am ersten Gehäuse 21 des ersten Schneidwerksteils 20 angebracht um ein vorbestimmtes Maß in y-Achsenrichtung vorsteht, und einen zweiten Fanghaken 59 auf, welcher an das dritte Gehäuse 41 des dritten Schneidwerksteils 40 angeformt ist und davon vorsteht.

Zum Antreiben der ersten und zweiten Schwenkungen weist das Schneidwerk 10 außerdem eine Antriebseinrichtung 60 (siehe Fig. 1) auf, die mit dem dritten Schneidwerksteil 40 gekoppelt ist, so dass durch eine Antriebsbewegung der Antriebseinrichtung 60 sowohl die erste Schwenkung als auch die zweite Schwenkung antreibbar ist.

Genauer weist die Antriebseinrichtung 60 zwei bewegungssynchronisierte hydraulische Kolben-Zylinder-Einheiten 61 (in Fig. 1 ist nur eine Kolben-Zylinder-Einheit 61 gezeigt) auf, welche an in y-Achsenrichtung entgegengesetzten Längsenden der Fördertrommel 22 angeordnet sind. Die Kolben-Zylinder-Einheiten 61 sind dabei jeweils mit einem Ende (hier dem Zylinder) an einem stationären Element der Erntemaschine 1 oder am ersten Gehäuse 21 des ersten Schneidwerksteils 20 als stationäres Element angelenkt und mit dem anderen Ende (hier der Kolbenstange) an einem stabilen Anlenkpunkt 40a (z.B. am dritten Gehäuse 41 oder an einem im dritten Gehäuse 41 gelagerten nicht bezeichneten Stützrahmen) des dritten Schneidwerksteils 40 angelenkt.

Nun werden unter Bezugnahme auf die Figuren 1 bis 6 die unterschiedlichen Schaltzustände der Schalteinrichtung 50 und damit erzielbare Stellungen des Schneidwerks 10 näher beschrieben werden.

Fig. 1 zeigt dabei eine Seitenansicht, wobei sich das Schneidwerk 10 in einer Wartungsstellung befindet, und Fig. 2 zeigt eine vergrößerte Ansicht eines Teils des Schneidwerks von Fig. 1, wobei sich die Schalteinrichtung 50 des Schneidwerks 10 im ersten Schaltzustand zum Ermöglichen der Wartungsstellung befindet.

Wie aus den Figuren 1 und 2 ersichtlich, wird für den ersten Schaltzustand der Schalteinrichtung 50 der erste Fanghaken 53 auf eine Position geschwenkt, in welcher der näher an der Stellelementschwenkachse A5 befindliche Rastabschnitt 54 des ersten Fanghakens 53 mit Abstand von der ersten Schneidwerksschwenkachse A2 mit dem zweiten Bolzen 58 in Eingriff steht. Somit ist im ersten Schaltzustand der Schalteinrichtung 50 der zweite Schneidwerksteil 30 fest mit dem ersten Schneidwerksteil 20 bzw. dem Rahmen 2 verbunden. Mit anderen Worten ist die Schalteinrichtung 50 eingerichtet, im ersten Schaltzustand den zweiten Schneidwerksteil 30 mit vorbestimmtem Abstand von der ersten Schneidwerksschwenkachse A2 ohne Schwenkbewegungstoleranz mechanisch direkt mit dem ersten Schneidwerksteil 20 zu koppeln.

Wie außerdem aus den Figuren 1 und 2 ersichtlich, wird für den ersten Schaltzustand der Schalteinrichtung 50 der am zweiten Schneidwerksteil 30 angeordnete erste Bolzen 57 in eine rechte Endstellung im Langloch 33 geschwenkt, so dass der am dritten Schneidwerksteil 40 angeordnete zweite Fanghaken 59 nicht mit dem ersten Bolzen 57 in Eingriff steht bzw. gelangen kann. Somit kann der dritte Schneidwerksteil 40 zum Erzielen der zweiten Schwenkung relativ zum zweiten Schneidwerksteil 30 verschwenkt werden.

Wie aus Fig. 1 ersichtlich, sind die Anlenkpunkte 40a der Kolben-Zylinder-Einheiten 61 am dritten Schneidwerksteil 40 mit relativ kurzem Abstand zur zweiten Schneidwerksschwenkachse A4 angeordnet, wodurch beim bewegungssynchronen Ausfahren der Kolben-Zylinder-Einheiten 61 ein relativ großer Öffnungsschwenkwinkel zwischen zweitem und drittem Schneidwerksteil 30, 40 von mindestens 70 Grad, insbesondere mindestens 80 Grad, erzielt wird. Mit anderen Worten ist der dritte Schneidwerksteil 40 so eingerichtet, dass im ersten Schaltzustand die zweite Schwenkung, wobei der dritte Schneidwerksteil 40 mit der Lagerungseinrichtung 44 der Schneidmesser 42 vom Leitelement 32 weggeschwenkt wird, mit dem Öffnungsschwenkwinkel von mindestens 70 Grad, insbesondere mindestens 80 Grad, ermöglicht ist.

Durch dieses weite Öffnen des dritten Schneidwerksteils 40 gegenüber dem zweiten Schneidwerksteil 30 wird eine für eine Wartung der Schneidmesser 42 und der Schneidwerksmechanik 43 geeignete Zugangsvariante komfortabel realisiert. Mit anderen Worten werden im ersten Schaltzustand durch die zweite Schwenkung die an der Lagerungseinrichtung 44 gelagerten Schneidmesser 42 vollständig aus dem Leitelement 32 des zweiten Schneidwerksteils 30 herausgeschwenkt, so dass sowohl die Schneidmesser 42 als auch die Schneidwerksmechanik 43 im Bereich des Öffnungsschwenkwinkels zugänglich sind, was deren Reinigung und Wartung begünstigt.

Fig. 3 zeigt eine vergrößerte Ansicht des Schneidwerks 10, wobei sich das Schneidwerk 10 in einer ersten Freigabestellung befindet, und Fig. 4 zeigt eine vergrößerte Ansicht eines Teils des Schneidwerks 10 von Fig. 3, wobei sich die Schalteinrichtung 50 des Schneidwerks 10 im zweiten Schaltzustand zum Ermöglichen der ersten Freigabestellung befindet.

Wie aus den Figuren 3 und 4 ersichtlich, wird für den zweiten Schaltzustand der Schalteinrichtung 50 der erste Fanghaken 53 auf eine Position geschwenkt, in welcher der weiter von der Stellelementschwenkachse A5 entfernte Rastabschnitt 55 des ersten Fanghakens 53 mit Abstand von der ersten Schneidwerksschwenkachse A2 und vom zweiten Bolzen 58 auf einer durch den zweiten Bolzen 58 verlaufenden Schwenkbahn S2 bezüglich der ersten Schneidwerksschwenkachse A2 angeordnet ist, so dass der Rastabschnitt 55 des ersten Fanghakens 53 mit Vollendung der ersten Schwenkung mit dem zweiten Bolzen 58 in Eingriff gelangt. Somit ist im zweiten Schaltzustand der Schalteinrichtung 50 der zweite Schneidwerksteil 30 erst mit Vollendung der ersten Schwenkung mit dem ersten Schneidwerksteil 20 bzw. dem Rahmen 2 verbunden. Mit anderen Worten ist die Schalteinrichtung 50 eingerichtet, im zweiten Schaltzustand den zweiten Schneidwerksteil 30 mit vorbestimmtem Abstand von der ersten Schneidwerksschwenkachse A2 mit Schwenkbewegungstoleranz mechanisch direkt mit dem ersten Schneidwerksteil 20 zu koppeln.

Genauer wird im zweiten Schaltzustand die erste Schwenkung mit einer solchen Schwenkbewegungstoleranz ermöglicht, dass das radiale von der Fördertrommel 22 Wegschwenken des Leitelements 32 mit dem zweiten Schneidwerksteil 30 auf einen vorbestimmten Erweiterungsschwenkwinkel zum Erweitern des Förderkanals 11 begrenzt ist. Der Erweiterungsschwenkwinkel beträgt dabei weniger als 10 Grad, insbesondere etwa 5 Grad. Der Antrieb der ersten Schwenkung erfolgt wieder über ein bewegungssynchrones Ausfahren der Kolben-Zylinder-Einheiten 61.

Wie außerdem aus den Figuren 3 und 4 ersichtlich, wird für den zweiten Schaltzustand der Schalteinrichtung 50 der am zweiten Schneidwerksteil 30 angeordnete erste Bolzen 57 in eine Mittelstellung im Langloch 33 geschwenkt, so dass der am dritten Schneidwerksteil 40 angeordnete zweite Fanghaken 59 nicht mit dem ersten Bolzen 57 in Eingriff steht bzw. gelangen kann. Somit kann der dritte Schneidwerksteil 40 zum Erzielen der zweiten Schwenkung relativ zum zweiten Schneidwerksteil 30 verschwenkt werden.

Genauer ist die Schalteinrichtung 50 eingerichtet, im zweiten Schaltzustand die zweite Schwenkung so zu ermöglichen, dass in Bezug auf eine vollendete erste Schwenkung die Schneidmesser 42 durch das vom Leitelement 32 Wegschwenken der Lagerungseinrichtung 44 aus der Schneidposition und damit aus dem Förderkanal 11 herausschwenkbar sind. Zu diesem Zweck werden nach Vollendung der ersten Schwenkung die Kolben-Zylinder-Einheiten 61 weiter bewegungssynchron ausgefahren, bis die zweite Schwenkung im zweiten Schaltzustand vollendet ist.

Dadurch, dass im zweiten Schaltzustand die erste Schwenkung mit dem Erweiterungsschwenkwinkel zum Erweitern des Förderkanals 11 ermöglicht ist, kann im Falle eines Stopfers im Förderkanal 11 durch dessen Erweiterung der Stopfer leichter durch den Förderkanal 11 hindurchgedrückt werden. Da der Förderkanal 11 jedoch nicht vollständig geöffnet wird, sondern nur um den Erweiterungsschwenkwinkel erweitert wird, wird zusätzlich vorteilhaft vermieden, dass Erntegut wie Gras zurück auf das Feld fällt.

In Kombination mit der Erweiterung des Förderkanals 11 um den Erweiterungsschwenkwinkel wird durch das aus dem Förderkanal 11 Herausschwenken der Schneidmesser 42 bei einem Stopfer im Förderkanal 11 weiterer Widerstand gegen ein Durchdrücken dessen beseitigt, so dass das Durchdrücken bzw. Beseitigen des Stopfers zusätzlich erleichtert wird.

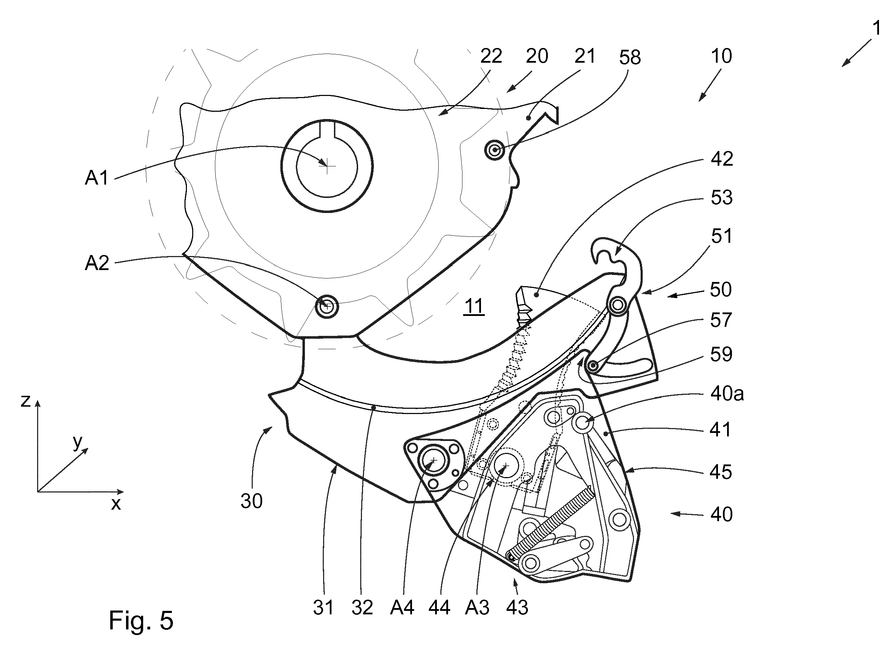

Fig. 5 zeigt schließlich eine vergrößerte Ansicht des Schneidwerks 10, wobei sich das Schneidwerk 10 in einer zweiten Freigabestellung befindet, und Fig. 6 zeigt eine vergrößerte Ansicht eines Teils des Schneidwerks von Fig. 5, wobei sich die Schalteinrichtung 50 des Schneidwerks 10 im dritten Schaltzustand zum Ermöglichen der zweiten Freigabestellung befindet.

Wie aus den Figuren 5 und 6 ersichtlich, wird für den dritten Schaltzustand der am zweiten Schneidwerksteil 30 angeordnete erste Bolzen 57 auf eine Position geschwenkt, in welcher der erste Bolzen 57 in eine linke Endstellung im Langloch 33 verschwenkt mit Abstand von der zweiten Schneidwerksschwenkachse A4 mit dem am dritten Schneidwerksteil 40 angebrachten zweiten Fanghaken 59 in Eingriff steht. Somit ist im dritten Schaltzustand der Schalteinrichtung 50 der zweite Schneidwerksteil 30 fest mit dem dritten Schneidwerksteil 40 verbunden. Mit anderen Worten ist die Schalteinrichtung 50 eingerichtet, im dritten Schaltzustand den zweiten Schneidwerksteil 30 mit vorbestimmtem Abstand von der zweiten Schneidwerksschwenkachse A4 ohne Schwenkbewegungstoleranz mechanisch direkt mit dem dritten Schneidwerksteil 40 zu koppeln.

Wie außerdem aus den Figuren 3 und 4 ersichtlich, wird für den dritten Schaltzustand der Schalteinrichtung 50 erste Fanghaken 53 auf eine solche Position geschwenkt, dass keiner der Rastabschnitte 54, 55 mit dem zweiten Bolzen 58 in Eingriff steht bzw. gelangen kann. Somit können der zweite und der dritte Schneidwerksteil 30, 40 zum Erzielen der ersten Schwenkung gemeinsam relativ zum ersten Schneidwerksteil 20 verschwenkt werden. Der Antrieb der ersten Schwenkung erfolgt dabei wieder über ein bewegungssynchrones Ausfahren der Kolben-Zylinder-Einheiten 61, bis die Fördertrommel 22 und das Leitelement 32 vollständig zugänglich sind, so dass neben dem Durchführen einer Wartung an der Fördertrommel 22 und dem Leitelement 32 auch große in den Förderkanal 11 eingezogene Fremdkörper wie z.B. Zaunpfähle entfernt werden können.

Obwohl in den Figuren 1 bis 6 nicht gezeigt, kann die Schalteinrichtung 50 außerdem einen vierten Schaltzustand herstellen, in dem die erste Schwenkung und die zweite Schwenkung gesperrt sind. Genauer ist für den vierten Schaltzustand der erste Fanghaken 53 auf die Position schwenkbar, in welcher der näher an der Stellelementschwenkachse A5 befindliche Rastabschnitt 54 des ersten Fanghakens 53 mit Abstand von der ersten Schneidwerksschwenkachse A2 mit dem zweiten Bolzen 58 in Eingriff steht, und ist der erste Bolzen 57 auf die Position bewegbar, in welcher der erste Bolzen 57 mit Abstand von der zweiten Schneidwerksschwenkachse A4 mit dem am dritten Schneidwerksteil 40 angebrachten zweiten Fanghaken 59 in Eingriff steht. Um den vierten Schaltzustand herzustellen, werden die beiden Stellelemente 52, 56 um die Stellelementschwenkachse A5 relativ zueinander verschwenkt. Der vierte Schaltzustand kann vorteilhaft für den Normalbetrieb des Schneidwerks 10 genutzt werden.

Im Fazit stellt das im Obigen beschriebene Schneidwerk 10 durch die unterschiedlichen wie beschriebenen Zugangsvarianten einen verbesserten Zugang zu seinen Komponenten bereit.

### Bezugszeichenliste

- 1: Erntemaschine
- 2: Rahmen
- 10: Schneidwerk
- 11: Förderkanal
- 11a: Eingang
- 20: erster Schneidwerksteil
- 21: erstes Gehäuse
- 22: Fördertrommel
- 30: zweiter Schneidwerksteil
- 31: zweites Gehäuse
- 32: Leitelement
- 33: Langloch
- 40: dritter Schneidwerksteil
- 40a: Anlenkpunkt
- 41: drittes Gehäuse
- 42: Schneidmesser
- 43: Schneidwerksmechanik
- 44: Lagerungseinrichtung
- 45: Schneidmesser-Überlastsicherung
- 50: Schalteinrichtung
- 51: Arretierungsvorrichtung
- 52: erstes Stellelement
- 53: erster Fanghaken
- 54: Rastabschnitt
- 55: Rastabschnitt
- 56: zweites Stellelement
- 57: erster Bolzen
- 58: zweiter Bolzen
- 59: zweiter Fanghaken
- 60: Antriebseinrichtung
- 61: Kolben-Zylinder-Einheit(en)
- A1: Drehachse
- A2: erste Schneidwerksschwenkachse
- A3: Schneidmesserschwenkachse
- A4: zweite Schneidwerksschwenkachse
- A5: Stellelementschwenkachse
- S2: Schwenkbahn
- x, y,: z Achsenrichtungen

## Patentansprüche

1. Schneidwerk (10) für eine Erntemaschine (1), aufweisend:
einen ersten Schneidwerksteil (20), welcher ein Gehäuse (21) und eine Fördertrommel (22) für Erntegut umfasst, die im Gehäuse (21) angeordnet um eine Drehachse (A1) drehbar gelagert ist,
einen zweiten Schneidwerksteil (30), welcher ein Leitelement (32) umfasst, das sich so umfänglich entlang der Fördertrommel (22) erstreckt, dass zwischen der Fördertrommel (22) und dem Leitelement (32) ein Förderkanal (11) für das Erntegut gebildet ist, und welcher um eine erste Schneidwerksschwenkachse (A2) schwenkbar am ersten Schneidwerksteil (20) gelagert ist, so dass als eine erste Schwenkung mit dem zweiten Schneidwerksteil (30) das Leitelement (32) radial von der Fördertrommel (22) wegschwenkbar ist,
einen dritten Schneidwerksteil (40), welcher eine Mehrzahl von sich in einer Schneidposition dieser jeweils in den Förderkanal (11) erstreckenden Schneidmessern (42) und eine Lagerungseinrichtung (44) umfasst, an der die Schneidmesser (42) gelagert sind, und welcher um eine zweite Schneidwerksschwenkachse (A4) schwenkbar am zweiten Schneidwerksteil (30) gelagert ist, so dass als eine zweite Schwenkung mit dem dritten Schneidwerksteil (40) die Lagerungseinrichtung (44) vom Leitelement (32) wegschwenkbar ist,
**gekennzeichnet durch** eine Schalteinrichtung (50), die eingerichtet ist, selektiv einen ersten Schaltzustand, in dem die erste Schwenkung gesperrt ist und die zweite Schwenkung ermöglicht ist, einen zweiten Schaltzustand, in dem die erste und die zweite Schwenkung ermöglicht sind, und einen dritten Schaltzustand, in dem die erste Schwenkung ermöglicht ist und die zweite Schwenkung gesperrt ist, herzustellen.

2. Schneidwerk (10) gemäß Anspruch 1, ferner mit einer Antriebseinrichtung (60), die mit dem dritten Schneidwerksteil (40) gekoppelt ist, so dass durch eine Antriebsbewegung der Antriebseinrichtung (60) sowohl die erste Schwenkung als auch die zweite Schwenkung antreibbar ist.

3. Schneidwerk (10) gemäß Anspruch 1 oder 2, wobei der dritte Schneidwerksteil (40) so eingerichtet ist, dass im ersten Schaltzustand die zweite Schwenkung, wobei der dritte Schneidwerksteil (40) mit der Lagerungseinrichtung (44) der Schneidmesser (42) vom Leitelement (32) weggeschwenkt wird, mit einem Öffnungsschwenkwinkel von mindestens 70 Grad ermöglicht ist.

4. Schneidwerk (10) gemäß einem der Ansprüche 1 bis 4, wobei die Schalteinrichtung (50) eingerichtet ist, im zweiten Schaltzustand die erste Schwenkung so zu ermöglichen, dass das radiale von der Fördertrommel (22) Wegschwenken des Leitelements (32) mit dem zweiten Schneidwerksteil (30) auf einen vorbestimmten Erweiterungsschwenkwinkel zum Erweitern des Förderkanals (11) begrenzt ist.

5. Schneidwerk (10) gemäß Anspruch 4, wobei der vorbestimmte Erweiterungsschwenkwinkel weniger als 10 Grad beträgt.

6. Schneidwerk (10) gemäß einem der Ansprüche 1 bis 5, wobei die Schalteinrichtung (50) eingerichtet ist, im zweiten Schaltzustand die zweite Schwenkung so zu ermöglichen, dass in Bezug auf eine vollendete erste Schwenkung die Schneidmesser (42) durch das vom Leitelement (32) Wegschwenken der Lagerungseinrichtung (44) aus der Schneidposition und damit aus dem Förderkanal (11) herausbewegbar sind.

7. Schneidwerk (10) gemäß einem der Ansprüche 1 bis 6, wobei die Schalteinrichtung (50) eingerichtet ist, im ersten Schaltzustand den zweiten Schneidwerksteil (30) mit vorbestimmtem Abstand von der ersten Schneidwerksschwenkachse (A2) ohne Schwenkbewegungstoleranz mechanisch direkt mit dem ersten Schneidwerksteil (20) zu koppeln.

8. Schneidwerk (10) gemäß einem der Ansprüche 1 bis 7, wobei die Schalteinrichtung (50) eingerichtet ist, im zweiten Schaltzustand den zweiten Schneidwerksteil (30) mit vorbestimmtem Abstand von der ersten Schneidwerksschwenkachse (A2) mit Schwenkbewegungstoleranz mechanisch direkt mit dem ersten Schneidwerksteil (20) zu koppeln.

9. Schneidwerk (10) gemäß einem der Ansprüche 1 bis 8, wobei die Schalteinrichtung (50) eingerichtet ist, im dritten Schaltzustand den zweiten Schneidwerksteil (30) mit vorbestimmtem Abstand von der zweiten Schneidwerksschwenkachse (A4) ohne Schwenkbewegungstoleranz mechanisch direkt mit dem dritten Schneidwerksteil (40) zu koppeln.

10. Schneidwerk (10) gemäß einem der Ansprüche 1 bis 9, wobei die Schalteinrichtung (50) aufweist:
eine Arretierungsvorrichtung (51), welche am zweiten Schneidwerksteil (30) vorgesehen ist und welche einen ersten Fanghaken (53) und einen ersten Bolzen (57) umfasst, die zum Realisieren der ersten bis dritten Schaltzustände beweglich gelagert sind,
einen zweiten Bolzen (58), welcher am ersten Schneidwerksteil (20) vorgesehen ist, und
einen zweiten Fanghaken (59), welcher am dritten Schneidwerksteil (40) vorgesehen ist,
wobei für den ersten Schaltzustand der erste Fanghaken (53) auf eine Position bewegbar ist, in welcher der erste Fanghaken (53) mit dem zweiten Bolzen (58) in Eingriff steht, wobei für den zweiten Schaltzustand der erste Fanghaken (53) auf eine Position bewegbar ist, in welcher der erste Fanghaken (53) mit Abstand vom zweiten Bolzen (58) auf einer durch den zweiten Bolzen (58) verlaufenden Schwenkbahn (S2) bezüglich der ersten Schneidwerksschwenkachse (A2) angeordnet ist, so dass der erste Fanghaken (53) mit Vollendung der ersten Schwenkung mit dem zweiten Bolzen (58) in Eingriff gelangt, und wobei für den dritten Schaltzustand der erste Bolzen (57) auf eine Position bewegbar ist, in welcher der erste Bolzen (57) mit dem zweiten Fanghaken (59) in Eingriff steht.

## Claims

1. A cutting mechanism (10) for a harvesting machine (1) comprising
a first cutting mechanism portion (20) which includes a housing (21) and a conveyor drum (22) for crop material, which arranged in the housing (21) is mounted rotatably about an axis of rotation (A1),
a second cutting mechanism portion (30) which includes a guide element (32) which extends peripherally along the conveyor drum (22) in such a way that a conveyor passage (11) for the crop material is formed between the conveyor drum (22) and the guide element (32), and which is mounted to the first cutting mechanism portion (20) pivotably about a first cutting mechanism pivot axis (A2) so that as a first pivotal movement with the second cutting mechanism portion (30) the guide element (32) is pivotable radially away from the conveyor drum (22), and
a third cutting mechanism portion (40) which includes a plurality of cutting blades (42) extending in a cutting position thereof into the conveyor passage (11) respectively and a mounting device (44) at which the cutting blades (42) are mounted, and which is mounted to the second cutting mechanism portion (30) pivotably about a second cutting mechanism pivot axis (A4) so that as a second pivotal movement with the third cutting mechanism portion (40) the mounting device (44) is pivotable away from the guide element (32),
**characterised by** a switching device (50) which is adapted to selectively produce a first switching state in which the first pivotal movement is blocked and the second pivotal movement is enabled, a second switching state in which the first and the second pivotal movement are enabled and a third switching state in which the first pivotal movement is enabled and the second pivotal movement is blocked.

2. A cutting mechanism (10) according to claim 1 and further comprising a drive device (60) which is coupled to the third cutting mechanism portion (40) so that both the first pivotal movement and also the second pivotal movement are drivable by a drive movement of the drive device (60).

3. A cutting mechanism (10) according to claim 1 or claim 2 wherein the third cutting mechanism portion (40) is so adapted that in the first switching state the second pivotal movement, wherein the third cutting mechanism portion (40) is pivoted away from the guide element (32) with the mounting device (44) of the cutting blades (4), is enabled with an opening pivotal angle of at least 70 degrees.

4. A cutting mechanism (10) according to one of claims 1 to 4 wherein the switching device (50) is adapted to enable the first pivotal movement in the second switching state in such a way that the radial pivotal movement of the guide element (32) away from the conveyor drum (22) with the second cutting mechanism portion (30) is limited to a predetermined expansion pivotal angle for expanding the conveyor passage (11).

5. A cutting mechanism (10) according to claim 4 wherein the predetermined expansion pivotal angle is less than 10 degrees.

6. A cutting mechanism (10) according to one of claims 1 to 5 wherein the switching device (50) is adapted in the second switching state to enable the second pivotal movement so that in relation to a completed first pivotal movement the cutting blades (42) are moveable out of the cutting position and thus out of the conveyor passage (11) by the pivotal movement of the mounting device (44) away from the guide element (32).

7. A cutting mechanism (10) according to one of claims 1 to 6 wherein the switching device (50) is adapted in the first switching state to couple the second cutting mechanism portion (30) mechanically directly to the first cutting mechanism portion (20) with a predetermined spacing from the first cutting mechanism pivot axis (A2) without a pivotal movement tolerance.

8. A cutting mechanism (10) according to one of claims 1 to 7 wherein the switching device (50) is adapted in the second switching state to couple the second cutting mechanism portion (30) mechanically directly to the first cutting mechanism portion (20) with a predetermined spacing from the first cutting mechanism pivot axis (A2) with a pivotal movement tolerance.

9. A cutting mechanism (10) according to one of claims 1 to 8 wherein the switching device (50) is adapted in the third switching state to couple the second cutting mechanism portion (30) mechanically directly to the third cutting mechanism portion (40) with a predetermined spacing from the second cutting mechanism pivot axis (A4) without a pivotal movement tolerance.

10. A cutting mechanism (10) according to one of claims 1 to 9 wherein the switching device (50) has:
an arresting device (51) which is provided at the second cutting mechanism portion (30) and which includes a first catch hook (53) and a first pin (57) which are mounted moveably to implement the first to third switching states
a second pin (58) provided at the second cutting mechanism portion (20), and
a second catch hook (59) provided at the third cutting mechanism portion (40),
wherein for the first switching state the first catch hook (53) is moveable to a position in which the first catch hook (53) is in engagement with the second pin (58), wherein for the second switching state the first catch hook (53) is moveable to a position in which the first catch hook (53) is arranged at a spacing from the second pin (58) on a pivotal path (S2) extending through the second pin (58) with respect to the first cutting mechanism pivot axis (A2) so that the first catch hook (53) comes into engagement with the second pin (58) with the conclusion of the first pivotal movement and wherein for the third switching state the first pin (57) is moveable to a position in which the first pin (57) is in engagement with the second catch hook (59).

## Revendications

1. Tablier de coupe (10) pour une machine de récolte (1), comprenant une première partie de tablier de coupe (20), laquelle comprend un carter (21) et un tambour d'alimentation (22) pour un produit de récolte, qui est disposé dans le carter (21) et monté tournant autour d'un axe de rotation (A1), une deuxième partie de tablier de coupe (30), laquelle comprend un élément de guidage (32) qui s'étend périphériquement le long du tambour d'alimentation (22) de façon à former un canal d'alimentation (11) pour le produit de récolte entre le tambour d'alimentation (22) et l'élément de guidage (32), et laquelle est montée pivotante autour d'un premier axe de pivotement de tablier de coupe (A2) sur la première partie de tablier de coupe (20) de sorte qu'un premier pivotement de la deuxième partie de tablier de coupe (30) permet d'écarter radialement l'élément de guidage (32) du tambour d'alimentation (22), une troisième partie de tablier de coupe (40), laquelle comprend une pluralité de couteaux (42) qui, dans leur position de coupe, s'étendent dans le canal d'alimentation (11) et un dispositif de palier (44) sur lequel les couteaux (42) sont montés, et laquelle est montée pivotante autour d'un deuxième axe de pivotement de tablier de coupe (A4) sur la deuxième partie de tablier de coupe (30) de sorte qu'un deuxième pivotement de la troisième partie de tablier de coupe (40) permet d'écarter le dispositif de palier (44) de l'élément de guidage (32), **caractérisé par** un dispositif de commutation (50) qui est conçu pour établir sélectivement un premier état de commutation, dans lequel le premier pivotement est bloqué et le deuxième pivotement est rendu possible, un deuxième état de commutation, dans lequel le premier et le deuxième pivotement sont rendus possibles, et un troisième état de commutation, dans lequel le premier pivotement est rendu possible et le deuxième pivotement est bloqué.

2. Tablier de coupe (10) selon la revendication 1, comprenant en outre un dispositif d'entraînement (60) qui est couplé à la troisième partie de tablier de coupe (40) de façon qu'un mouvement d'entraînement du dispositif d'entraînement (60) permet d'entraîner aussi bien le premier pivotement que le deuxième pivotement.

3. Tablier de coupe (10) selon la revendication 1 ou 2, dans lequel la troisième partie de tablier de coupe (40) est conçue de façon que, dans le premier état de commutation, le deuxième pivotement, lors duquel la troisième partie de tablier de coupe (40) avec le dispositif de palier (44) des couteaux (42) est écartée de l'élément de guidage (32), est rendu possible avec un angle de pivotement d'ouverture d'au moins 70 degrés.

4. Tablier de coupe (10) selon l'une des revendications 1 à 4, dans lequel le dispositif de commutation (50) est conçu pour, dans le deuxième état de commutation, rendre possible le premier pivotement de façon que l'écartement radial de l'élément de guidage (32) du tambour d'alimentation (22) avec la deuxième partie de tablier de coupe (30) soit limité à un angle de pivotement d'élargissement prédéterminé pour élargir le canal d'alimentation (11).

5. Tablier de coupe (10) selon la revendication 4, dans lequel l'angle de pivotement d'élargissement prédéterminé est inférieur à 10 degrés.

6. Tablier de coupe (10) selon l'une des revendications 1 à 5, dans lequel le dispositif de commutation (50) est conçu pour, dans le deuxième état de commutation, rendre possible le deuxième pivotement de façon que, par rapport à un premier pivotement complet, les couteaux (42) puissent être sortis de la position de coupe et donc du canal d'alimentation (11) par écartement pivotant du dispositif de palier (44) par rapport à l'élément de guidage (32).

7. Tablier de coupe (10) selon l'une des revendications 1 à 6, dans lequel le dispositif de commutation (50) est conçu pour, dans le premier état de commutation, coupler mécaniquement directement la deuxième partie de tablier de coupe (30) avec la première partie de tablier de coupe (20) à une distance prédéterminée du premier axe de pivotement de tablier de coupe (A2) sans tolérance de mouvement de pivotement.

8. Tablier de coupe (10) selon l'une des revendications 1 à 7, dans lequel le dispositif de commutation (50) est conçu pour, dans le deuxième état de commutation, coupler mécaniquement directement la deuxième partie de tablier de coupe (30) avec la première partie de tablier de coupe (20) à une distance prédéterminée du premier axe de pivotement de tablier de coupe (A2) avec une tolérance de mouvement de pivotement.

9. Tablier de coupe (10) selon l'une des revendications 1 à 8, dans lequel le dispositif de commutation (50) est conçu pour, dans le troisième état de commutation, coupler mécaniquement directement la deuxième partie de tablier de coupe (30) avec la troisième partie de tablier de coupe (40) à une distance prédéterminée du deuxième axe de pivotement de tablier de coupe (A4) sans tolérance de mouvement de pivotement.

10. Tablier de coupe (10) selon l'une des revendications 1 à 9, dans lequel le dispositif de commutation (50) comprend un dispositif d'arrêt (51) qui est prévu sur la deuxième partie de tablier de coupe (30) et qui comprend un premier crochet d'arrêt (53) et un premier axe (57) qui sont montés mobiles pour réaliser les premier à troisième états de commutation, un deuxième axe (58) qui est prévu sur la première partie de tablier de coupe (20) et un deuxième crochet d'arrêt (59) qui est prévu sur la troisième partie de tablier de coupe (40), le premier crochet d'arrêt (53) étant, pour le premier état de commutation, déplaçable vers une position dans laquelle le premier crochet d'arrêt (53) est en prise avec le deuxième axe (58), le premier crochet d'arrêt (53) étant, pour le deuxième état de commutation, déplaçable vers une position dans laquelle le premier crochet d'arrêt (53) est disposé à distance du deuxième axe (58) sur une trajectoire de pivotement (S2) passant par le deuxième axe (58) par rapport au premier axe de pivotement de tablier de coupe (A2), de sorte que le premier crochet d'arrêt (53) entre en prise avec le deuxième axe (58) à la fin du premier pivotement, et le premier axe (57) étant, pour le troisième état de commutation, déplaçable vers une position dans laquelle le premier axe (57) est en prise avec le deuxième crochet d'arrêt (59).
